# EUROPÄISCHE PATENTSCHRIFT

(11) **EP 2 467 601 B1**
(45) Veröffentlichungstag und Bekanntmachung des Hinweises auf die Patenterteilung: **05.03.2014**
(21) Anmeldenummer: 10742157.0
(22) Anmeldetag: 12.08.2010
(51) Int. Cl.: F01K 7/22, F01K 7/38, F01K 7/40, F01K 13/02, F22D 1/00

(54) **SOLARTHERMISCHES KRAFTWERK MIT WÄRMETAUSCHER IN DER SPEISEWASSERVORWÄRMSTRECKE UND VERFAHREN ZUM BETRIEB DES KRAFTWERKS**
SOLAR THERMAL POWER PLANT HAVING A HEAT EXCHANGER IN THE FEEDWATER PREHEATING SECTION AND METHOD FOR OPERATING THE POWER PLANT
CENTRALE SOLAIRE THERMIQUE COMPRENANT UN ÉCHANGEUR DE CHALEUR DANS LA SECTION DE PRÉCHAUFFAGE D'EAU D'ALIMENTATION, ET PROCÉDÉ D'EXPLOITATION DE CETTE CENTRALE

(30) Priorität: 21.08.2009 DE 102009038446
(43) Veröffentlichungstag der Anmeldung: 27.06.2012
(73) Patentinhaber: Flagsol GmbH, 50678 Köln (DE)
(72) Erfinder: NÖLKE, Marcus, 40878 Ratingen (DE); ELLERT, Ronald, 69181 Leimen (DE)
(74) Vertreter: Viering, Jentschura & Partner Patent- und Rechtsanwälte
(86) Internationale Anmeldenummer: PCT/EP2010/061796
(87) Internationale Veröffentlichungsnummer: WO 2011/020776

(56) Entgegenhaltungen:
- WO-A2-2007/073008
- DE-C1- 10 128 562
- DE-U1-202008 002 599
- US-A- 4 438 630

## Beschreibung

Die Erfindung richtet sich auf ein solarthermisches Kraftwerk mit einem solarthermisch beheizten Wärmeträgermedium-Kreislauf und einem damit über eine in den Wärmeträgermedium-Kreislauf eingebundene Dampferzeugungsstufe thermisch gekoppelten Wasser-Dampf-Kreislauf einer Turbinenstufe.

Weiterhin richtet sich die Erfindung auf ein Verfahren zum Betrieb eines solarthermischen Kraftwerks.

Aus der Praxis sind solarthermische Kraftwerke bekannt, die einen Wärmeträgermedium-Kreislauf und einen damit über eine Dampferzeugungsstufe thermisch gekoppelten Wasser-Dampf-Kreislauf einer Turbinenstufe aufweisen. Hierbei wird das in Absorbern erwärmte Wärmeträgermedium von den Sonnenkollektoren eines Solarfeldes einer verschiedene Wärmetauscher umfassenden Dampferzeugungsstufe zugeführt, in welcher Speisewasser in überhitzten Dampf überführt wird. Diese Dampferzeugungsstufe umfasst einen solarthermischen Überhitzer, einen solarthermischen Dampferzeuger sowie einen solarthermischen Vorwärmer, durch welche das Wärmeträgermedium vom Solarfeld kommend hindurchgeführt und dann zum Solarfeld zurückgeführt wird. Hierbei kann in dem Wärmeträgermedium-Kreislauf ein thermischer Speicher vorgesehen sein, der nicht benötigte Wärmemengen des Wärmeträgermediums speichert. Auch kann es vorgesehen sein, dass in dem Wärmeträgermedium-Kreislauf ein fossilbefeuerter Erhitzer zur zusätzlichen Erwärmung des Wärmeträgermediums angeordnet ist. Das in der Dampferzeugungsstufe in überhitzten Dampf überführte Speisewasser wird dann einer Dampfturbine oder einem Turbosatz mit angeschlossenem Generator zugeführt und anschließend nach Durchströmen eines Kondensators und eines Abscheiders/Entgasers als Speisewasser wieder der Dampferzeugungsstufe zugeführt. Solche Kraftwerke sind aus den Veröffentlichungen WO 2007/073008 und DE 202008002599 U1 bekannt.

Das Solarfeld besteht aus parabolförmig gebogenen Trog-Spiegeln, die das Sonnenlicht auf einen in der Brennlinie positionierten Absorber konzentrieren. Die in Reihe geschalteten Absorber eines jeden Stranges sowie die Absorber der parallel geschalteten Sonnenkollektorstränge werden von einem Wärmeträgermedium, beispielsweise einem Thermoöl, durchströmt, das im Verlauf des Wärmeträgermedium-Kreislaufes in der Dampferzeugungsstufe seine Wärme an den Wasser-Dampf-Kreislauf abgibt. Das Wärmeträgermedium weist eine solche Temperatur auf, dass in dem thermischen Überhitzer der Dampferzeugungsstufe eine Dampftemperatur von knapp unter 400°C erreicht werden kann, mit welcher der überhitzte Dampf dann in die Dampfturbine oder den Turbosatz, das heißt insbesondere mindestens eine Hochdruckturbine mit nachgeschalteten Mitteldruck- und Niederdruckturbinen, eintritt. Der Wirkungsgrad eines solchen Kraftwerkes liegt bei etwa 38%, wobei das solarthermische Kraftwerk aus wirtschaftlichen Gründen nur diskontinuierlich betrieben wird.

Die im solarthermischen Überhitzer der Druckerzeugungsstufe maximal erreichbare Dampftemperatur ist von der so genannten Temperaturfestigkeit, d.h. der maximal erreichbaren Temperatur des im Wärmeträgermedium-Kreislauf zirkulierenden Wärmeträgermediums bestimmt. Oberhalb einer bestimmten Maximaltemperatur ist das Wärmeträgermedium, beispielsweise das Thermoöl, nicht mehr ausreichend stabil beziehungsweise temperaturfest und kann dann die in ihm gespeicherte Wärmemenge nicht mehr optimal an den Wasser-Dampf-Kreislauf abgeben. Beispielsweise ändert das Wärmeträgermedium ab einer bestimmten Temperatur seinen Aggregatszustand, wodurch sich seine Wirkung hinsichtlich der möglichen Wärmeabgabe in der Dampferzeugungsstufe vermindert. Ein wie beispielsweise Thermoöl für den Einsatz als flüssiges Wärmeträgermedium vorgesehenes Medium kann nicht in Bereiche erhitzt werden, in welchen es dann in den dampfförmigen Zustand übergeht. Dadurch ist der thermische Wirkungsgrad von solarthermischen Kraftwerken mit Parabolrinnensonnenkollektoren begrenzt.

Weiterhin werden bei aus der Praxis bekannten solarthermischen Kraftwerken der Wärmeträgermedium-Kreislauf und auch der Wasser-Dampf-Kreislauf mit der zugeordneten Turbinenstufe kleiner, d.h. in ihrer Leistungsaufnahme und/oder Leistungsabgabe kleiner ausgelegt, als es der maximal aus dem dem Wärmeträgermedium-Kreislauf zugeordneten Solarfeld entnehmbaren Wärmeleistung oder Wärmeenergie entspricht, da das Solarfeld diese maximale Leistung erfahrungsgemäß nur wenige Stunde im Jahr erreichen kann. Unter dem Gesichtspunkt der Optimierung der Wirtschaftlichkeit des gesamten solarthermischen Kraftwerkes wird daher das Kraftwerk auf eine gegenüber der aufgrund des Solarfeldes eigentlich maximal möglichen Auslegungsleistung geringere Leistung für den Wärmeträgermedium-Kreislauf und den Wasser-Dampf-Kreislauf mit Turbosatz ausgelegt. Bei Betriebszuständen in denen das Solarfeld eine höhere Wärmeleistung erzeugen kann, als der Wärmeträgermedium-Kreislauf und der Wasser-Dampf-Kreislauf aufgrund der vorgegebenen Auslegung übernehmen können, werden einzelne Kollektoren des Solarfeldes gezielt defokussiert, bis die Wärmeleistung des Solarfeldes der Nennleistung von Wärmeträgermedium-Kreislauf oder Wärmeträgermedium-System und Wasser-Dampf-Kreislauf oder Turbosatz entspricht. Dieser Vorgang wird "Heat-Dumping" genannt. Aufgrund dieser allgemein üblichen Auslegung von solarthermischen Kraftwerken werden etwa 5-8% der jährlich verfügbaren solaren Wärmeleistung nicht genutzt.

Der Erfindung liegt die Aufgabe zugrunde, eine Lösung zu schaffen, die die Ausnutzung der Wärmeleistung eines Solarfeldes eines solarthermischen Kraftwerks verbessert und die Notwendigkeit einer Defokussierung von Kollektoren des Solarfeldes zumindest verringert.

Bei einem solarthermischen Kraftwerk der eingangs näher bezeichneten Art wird diese Aufgabe erfindungsgemäß dadurch gelöst, dass im Wasser-Dampf-Kreislauf in der zwischen einem Entgaser und der Dampferzeugungsstufe ausgebildeten Speisewasservorwärmstrecke mindestens ein in den Wärmeträgermedium-Kreislauf eingebundener Wärmetauscher angeordnet ist.

Bei einem Verfahren der eingangs näher bezeichneten Art wird diese Aufgabe erfindungsgemäß dadurch gelöst, dass der mindestens eine Wärmetauscher nicht permanent und/oder dauerhaft vom Wärmeträgermedium durchströmt wird.

Vorteilhafte Ausgestaltungen und zweckmäßige Weiterbildungen der Erfindung sind Gegenstand der jeweiligen abhängigen Ansprüche.

Der gegenüber den aus dem Stand der Technik bekannten solarthermischen Kraftwerken zusätzlich in der Speisewasservorwärmstrecke positionierte mindestens eine Wärmetauscher wird mit dem Wärmeträgermedium des Wärmeträgermedium-Kreislaufs, in der Regel und vorzugsweise ein Thermoöl, beheizt, welches vorzugsweise stromabwärts des Dampferzeugers und/oder eines parallel dazu geschalteten Zwischenüberhitzers entnommen wird. Bei hoher solarer Einstrahlung kann der Wärmeträgermedium-Kreislauf nun so gesteuert werden, dass das Wärmeträgermedium stromabwärts der Dampferzeugungsstufe diesen mindestens einen in der Speisewasservorwärmstrecke angeordneten Wärmetauscher durchströmt und Wärme an das hier ebenfalls durch den Wärmetauscher geführte Wasser des Wasser-Dampf-Kreislaufes abgibt. Hierdurch wird das Wärmeträgermedium auf eine Temperatur unterhalb seiner Auslegungsrücklauftemperatur - bezogen auf solche Kraftwerke ohne den erfindungsgemäßen Wärmetauscher und mit der vorstehend beschriebenen üblichen verminderten Auslegungsleistung auf der Seite des Wärmeträgermedium-Kreislaufes und des Wasser-Dampf-Kreislaufes im Verhältnis zur möglichen Wärmeenergieleistung des Solarfeldes - abgekühlt. Es fließt somit - gegenüber der ursprünglichen oder üblichen Auslegung - kälteres Wärmeträgermedium, insbesondere Thermoöl, in das Solarfeld und die Stränge und Schleifen an Solarkollektoren zurück. Da die Austrittstemperatur des Wärmeträgermediums des Solarfeldes und der einzelnen Schleifen oder Stränge an Solarkollektoren konstant bei ca. 393°C gehalten wird, erhöht sich somit im Solarfeld die Temperaturdifferenz zwischen Einlauftemperatur des Wärmeträgermediums und Auslauftemperatur des Wärmeträgermediums. Dies hat zur Folge, dass bei gleichem Wärmeträgermedium-Massenstrom eine höhere Wärmemenge auf das Wärmeträgermedium beim Durchströmen des Solarfeldes übertragen werden kann, als es der eigentlichen ursprünglichen oder üblichen Auslegung des/eines solarthermischen Kraftwerkes entspricht. Folglich ist eine Defokussierung einzelner Solarkollektoren nicht mehr notwendig und auch in Zeiten hoher, über der eigentlichen Auslegungswärmeleistung liegender Sonneneinstrahlung kann die gewonnene Wärmeenergie an das Wärmeträgermedium abgegeben werden.

In Ausgestaltung sieht die Erfindung vor, dass der mindestens eine Wärmetauscher in Strömungsrichtung des Wärmeträgermediums stromabwärts der Dampferzeugerstufe in den Wärmeträgermedium-Kreislauf eingebunden ist. Die von dem Wärmeträgermedium in der Speisewasservorwärmstrecke über den mindestens einen Wärmetauscher an den Wasser-Dampf-Kreislauf übertragene Wärme führt dort zu einer Aufheizung des Speisewassers. Diese Aufheizung muss nun nicht mehr von den im Wasser-Dampf-Kreislauf in Strömungsrichtung des Speisewassers stromabwärts des erfindungsgemäßen Wärmetauschers angeordneten Wärmetauschern der Dampferzeugungsstufe, beispielsweise einem in Strömungsrichtung zunächst folgenden (Hochdruck-)Vorwärmer, übernommen werden. Als Folge der höheren Einlauftemperatur des Speisewassers in den (Hochdruck-)Vorwärmer oder die Dampferzeugerstufe, zieht dieser oder zieht diese dann automatisch weniger Anzapfdampf aus der oder den Dampfturbinen. Hierdurch erhöht sich die Dampfmenge, die in der/den Turbine(n) expandiert und somit die elektrische Leistung des mit einem Generator versehenen Turbosatzes. Die jährlich nicht genutzte Einstrahlung kann mit der Erfindung um ca. 3% reduziert werden, wodurch sich gleichzeitig die jährlich produzierte Strommenge um ebenfalls ca. 3% erhöhen lässt, was die Wirtschaftlichkeit der Gesamtanlage anhebt.

Weiterhin sieht die Erfindung in Weiterbildung auch vor, dass der mindestens eine Wärmetauscher in Strömungsrichtung des Wärmeträgermediums stromabwärts eines parallel zur Dampferzeugerstufe geschalteten Zwischenüberhitzers in den Wärmeträgermedium-Kreislauf eingebunden ist.

Besonders zweckmäßig ist es weiterhin, wenn der mindestens eine Wärmetauscher als Hochdruck-Speisewasser-Vorwärmer ausgebildet ist. Dies ermöglicht eine unkomplizierte Anordnung im Wasser-Dampf-Kreislauf der Turbinenstufe des solarthermischen Kraftwerks.

Da der mindestens eine zusätzliche Wärmetauscher nicht dauerhaft vom Wärmeträgermedium durchströmt werden soll, sondern als zusätzliche Wärmeeintragsquelle für den Wasser-Dampf-Kreislauf vorgesehen ist, zeichnet sich die Erfindung weiterhin dadurch aus, dass der mindestens eine Wärmetauscher für eine tägliche Betriebszeit von bis zu fünf, vorzugsweise bis zu drei, Betriebsstunden ausgelegt ist.

In Ausgestaltung des erfindungsgemäßen Verfahrens zum Betrieb des solarthermischen Kraftwerkes sind besondere Betriebsphasen oder Betriebssituationen vorgesehen, in welchen der mindestens eine zusätzliche Wärmetauscher vom Wärmeträgermedium durchströmt wird. Die Erfindung sieht daher in weiterer Ausgestaltung des Verfahrens vor, dass der mindestens eine Wärmetauscher beim Anfahren, insbesondere beim täglichen oder bei jedem Anfahren, und/oder pro, insbesondere täglichem, Warmstart des Kraftwerks und/oder in der Abfangphase, insbesondere in jeder Abfangphase, und/oder an Tagen, an welchen das Solarfeld mehr Wärmeenergie produziert als es der Auslegung des solarthermischen Kraftwerks entspricht, zumindest zeitweise vom Wärmeträgermedium des Wärmeträgermedium-Kreislaufs durchströmt wird.

Somit kann mit der Erfindung also das tägliche Anfahren eines solarthermischen Kraftwerkes beschleunigt werden. Bisher kommt die üblicherweise Anzapfdampf-beheizte (Hochdruck-) Vorwärmstrecke des Speisewassers immer erst dann zum Einsatz, wenn die Turbinen mit Generator, d.h. der Turbosatz, mit einer gewissen Mindestleistung ins Hochspannungsnetz Energie einspeist. Bis der Anzapfdampf zur Verfügung steht, kann die Dampferzeugerstufe ihre Dampfleistung nur mit einem vorgegebenen, systembedingten Temperaturgradienten steigern. Eine Volllast erreicht ein solarthermisches Kraftwerk erst nach Durchlaufen dieses Aufheizprozesses. Mit dem mindestens einen zusätzlichen erfindungsgemäßen Wärmetauscher in der Speisewasservorwärmstrecke steht nun ein zusätzlicher, der Dampferzeugungsstufe vorgeschalteter Wärmeeintragungsort in dem Wasser-Dampf-Kreislauf zur Verfügung. Dies führt dazu, dass bei täglichen Aufheizphasen der Turbosatz, d.h. der Wasser-Dampf-Kreislauf mit Dampfturbine und Generator, täglich ca. 15 min früher am Netz ist, also mit der Einspeisung von elektrischer Energie ins Stromleitungsnetz beginnen kann. Dies führt zu etwa 75 Mehr-Betriebsstunden des Kraftwerks pro Jahr und erhöht die jährlich produzierte Strommenge um etwa 3%. Auch deshalb verbessert sich die Wirtschaftlichkeit der Gesamtanlage aufgrund der erfindungsgemäßen Ausgestaltung.

In weiterer Ausgestaltung des erfindungsgemäßen Verfahrens ist es zudem von Vorteil, wenn in einer Abfangphase des solarthermischen Kraftwerks der mindestens eine Wärmetauscher nach oder gleichzeitig mit dem Auslösen eines Notfall-Schnellabschaltungssignals mindestens einer oder aller Dampfturbinen(n) vom Wärmeträgermedium des Wärmeträgermedium-Kreislaufs durchströmt wird.

Hierbei ist es dann zudem zweckmäßig, wenn parallel der Wasser-Dampf-Kreislauf auf eine Teillast oder in einen Teillastbereich heruntergefahren wird, was die Erfindung schließlich auch vorsieht.

Weiterhin ist mit der Erfindung daher also auch der Vorteil verbunden, dass die Speisewasservorwärmstrecke und die solarbeheizte Dampferzeugungsstufe bei einem Dampfturbinen-Schnellschluss vor größeren Thermoschocks bewahrt werden, da der erfindungsgemäße Wärmeträgermedium-beheizte Wärmetauscher die Speisewasservorwärmung in ausreichendem Maße und anlagenschonend übernehmen und sicherstellen kann. Hierdurch erhöht sich die Lebensdauer dieses Teiles der Anlagen des solarthermischen Kraftwerkes und beschleunigt sich der Heißstart des Kraftwerkes im Bereich des Wasser-Dampf-Kreislaufes bzw. des Powerblocks.

Insgesamt stellt die Erfindung eine Möglichkeit zur Verfügung, bei einem relativ niedrigen Investitionsaufwand sowohl eine Overload-Fähigkeit des Solarfeldes als auch des Wärmeträgermedium-Kreislaufes und des Wasser-Dampf-Kreislaufes zu erzielen. Weiterhin wird eine Erhöhung der Anfahrgeschwindigkeit beim morgendlichen Warmstart und auch beim Heißstart nach einer ungeplanten Dampfturbinen-Abschaltung mittels des erfindungsgemäß angeordneten Wärmetauschers ermöglicht.

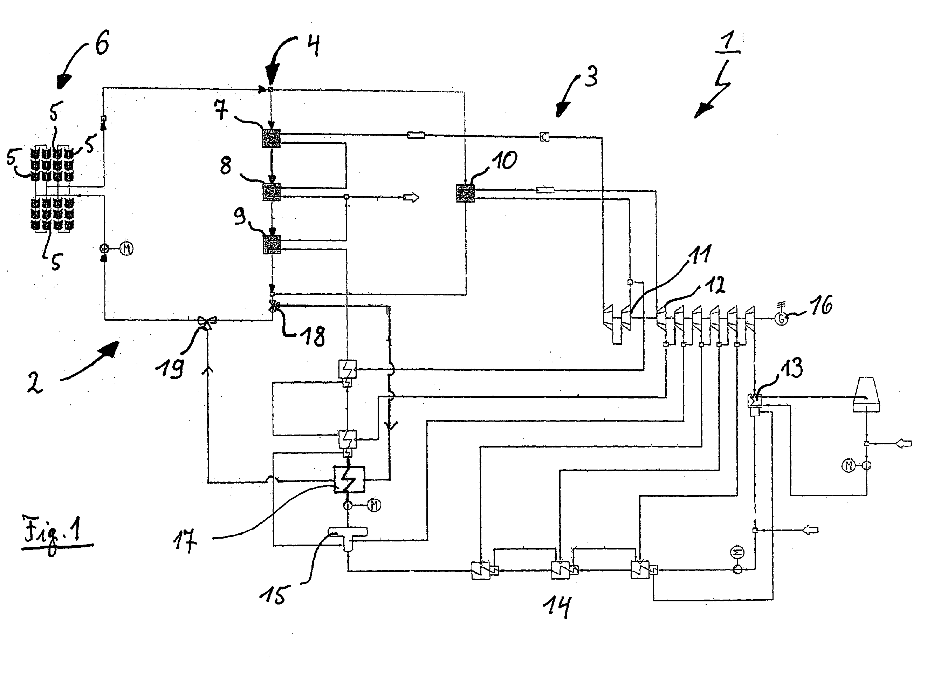

Die Erfindung ist nachstehend anhand einer Zeichnung beispielhaft näher erläutert. Diese zeigt in der einzigen Figur in schematischer Darstellung die Anordnung eines solarthermischen Kraftwerkes.

Das in der einzigen Figur schematisch dargestellte und insgesamt mit 1 bezeichnete solarthermische Kraftwerk umfasst einen Wärmeträgermedium-Kreislauf 2 und einen Wasser-Dampf-Kreislauf 3 einer Turbinenstufe, die über eine Dampferzeugungsstufe 4 thermisch miteinander gekoppelt sind. In dem solarthermisch beheizten Wärmeträgermedium-Kreislauf 2 fließt in dem aus mehreren parallel zueinander angeordneten Sonnenkollektorsträngen 5 gebildeten Solarfeld 6 mittels dort ausgebildeter Parabolspiegel erwärmtes Wärmeträgermedium, beispielsweise ein Thermoöl, im Kreislauf zu der Dampferzeugungsstufe 4, durchströmt dort einen solarthermischen Überhitzer 7, einen solarthermischen Dampferzeuger 8 sowie einen solarthermischen Vorwärmer 9, insbesondere Hochdruck-Vorwärmer, und wird dann zum Solarfeld 6 zurückgeführt. Weiterhin ist in dem Wärmeträgermedium-Kreislauf 2 noch ein solarthermischer Zwischenüberhitzer 10 angeordnet, mit dem aus einer Hochdruckturbine 11 austretender Dampf nochmals erhitzt werden kann, bevor dieser dann einer Nieder- oder Mitteldruckturbine 12 zugeführt wird. Der Zwischenüberhitzer 10 ist parallel zur Dampferzeugungsstufe 4 mit einer in Bezug auf die Strömungsrichtung des Wärmeträgermediums stromaufwärts des Überhitzers 7 abzweigenden und stromabwärts des Vorwärmers 9 einmündenden Verbindungsleitung in den Wärmeträgermedium-Kreislauf 2 eingebunden. Die Hochdruckturbine 11 und die Niederdruck- oder Mitteldruckturbine 12 sind in den Wasser-Dampf-Kreislauf 3 der Turbinenstufe eingekoppelt, in welchem Wasser/Speisewasser im Gegenstrom zum Wärmeträgermedium des Wärmeträgermedium-Kreislaufes 2 zunächst dem solarthermischen Vorwärmer 9, dann dem solarthermischen Dampferzeuger 8 und danach dem solarthermischen Überhitzer 7 zugeführt wird. Von dem solarthermischen Überhitzer 7 gelangt das nun dampfförmige Wasser als überhitzter Dampf zu der Hochdruckseite der oder bei mehreren einer Hochdruckturbine 11.

Von der oder bei mehreren den Niederdruck- oder Mitteldruckturbine(n) 12 wird der Dampf nach Durchlaufen eines Kondensators 13 und einer Niederdruckvorwärmstrecke 14 sowie eines Entgasers 15 als Speisewasser in den solarthermischen Vorwärmer 9 zurückgeführt. An den Niederdruck- oder Mitteldruckturbinen 12 ist ein Generator 16 zur Stromerzeugung angeschlossen.

Weiterhin ist in der zwischen dem Entgaser 15 und der Dampferzeugungsstufe 4, d.h. dem Vorwärmer 9, ausgebildeten Speisewasservorwärmstrecke mindestens ein Wärmetauscher 17 angeordnet, der mit dem Wärmeträgermedium-Kreislauf 2 gekoppelt und somit sowohl in den Trägermedium-Kreislauf 2 als auch in den Wasser-Dampf-Kreislauf 3 eingekoppelt ist. Dieser mindestens eine Wärmetauscher 17 ist in Strömungsrichtung des Wärmeträgermediums im Wärmeträgermedium-Kreislauf 2 stromabwärts der Dampferzeugungsstufe 4 und stromabwärts der Einmündung der von dem Zwischenüberhitzer 10 kommenden Leitung an einer Abzweigung 18 mit dem Wärmeträgermedium-Kreislauf 2 verbunden. Das hier abgezweigte Wärmeträgermedium durchläuft den mindestens einen Wärmetauscher 17 und wird dann stromaufwärts des Solarfeldes 6 und stromabwärts der Abzweigung 18 an einer Verzweigung 19 dem Wärmeträgermedium-Kreislauf wieder zugeführt.

Ebenso wird der mindestens eine Wärmetauscher 17 vom vom Entgaser 15 kommenden Speisewasser in Bezug auf die Strömungsrichtung des Speisewassers stromaufwärts der Dampferzeugungsstufe 4 durchströmt.

Der mindestens eine zusätzliche Wärmetauscher 17 wird nicht permanent und dauerhaft von dem im Wärmeträgermedium-Kreislauf 2 zirkulierenden Wärmeträgermedium durchströmt, sondern lediglich dann, wenn er eine prozess- und/oder anlagentechnisch vorgesehene Aufgabe erfüllen soll, vom Wärmeträgermedium, im vorliegenden Falle Thermoöl, durchströmt.

Eine Aufgabe des Wärmetauschers 17 besteht in der Unterstützung des Anfahrens des Dampferzeugers, so dass er beim täglichen Anfahren des Dampferzeugers circa eine Stunde pro täglichem Warmstart in Betrieb ist, also während dieser Zeit vom Wärmeträgermedium durchströmt wird. Um ein schnelleres Anfahren des oder der Dampferzeuger und des Dampfturbinen-Generator-Satzes und eine schnelleres Erreichen der vollen Generatorleistung zu erzielen, ist der zusätzliche mindestens eine Wärmetauscher 17 als Hochdruck-Speisewasser-Vorwärmer circa eine Stunde pro täglichem Warmstart in Betrieb.

Ebenso kann der zusätzliche Wärmetauscher 17 in der Abfangphase des solarthermischen Kraftwerks in Betrieb, d.h. vom Wärmeträgermedium durchströmt, sein. Um den sich einstellenden Temperaturschock in Hochdruck-Speisewasser-Vorwärmern zu begrenzen, der sich dann einstellt, wenn eine Notfall-Schnellabschaltung einer oder mehrerer Dampfturbinen vorliegt und die Hochdruck-Speisewasser-Vorwärmer schlagartig nicht mehr mit Anzapfdampf aus einer notfallmäßig abgeschalteten Dampfturbine beheizt werden, wird der zunächst weiter unvermindert in Richtung des oder der Dampferzeuger strömende Hochdruck-Speisewasserstrom alternativ mittels des zusätzlichen Wärmetauschers 17 erwärmt. In diesem Fall wird unmittelbar, d.h. wenige Bruchteile einer Sekunde, nach oder vorzugsweise gleichzeitig mit dem Notfall-Schnellabschaltungssignal ("Trip-Signal") der Dampfturbine begonnen, Wärmeträgermedium durch den einen Hochdruck-Speisewasser-Vorwärmer ausbildenden zusätzlichen Wärmetauscher 17 zu leiten. Parallel wird gleichzeitig der Wasser-Dampf-Kreislauf 3 im Bypass-Modus zügig auf eine niedrige Teillast heruntergefahren. In einer solchen Abfangphase ist der zusätzliche Wärmetauscher 17 circa 15 Minuten in Betrieb. Ebenso kann der zusätzliche Wärmetauscher 17 in einem solchen Fall für circa 15 Minuten im Rahmen eines erneuten Heißstartes in Betrieb sein, falls die Ursache für die Notfallabschaltung relativ schnell behoben werden kann.

Schließlich ist eine weitere Betriebsphase des zusätzlichen Wärmetauschers 17 dann vorgesehen, wenn die eingangs beschriebenen Tage außerordentlicher Sonneneinstrahlung vorliegen, an welchen mittels des Solarfeldes 6 und des Wärmeträgermedium-Kreislaufs 2 mehr Wärmeenergie produziert werden kann, als es der Auslegung des solarthermischen Kraftwerkes 1 entspricht. Zur Nutzung eines Teiles dieser außerordentlich auftretenden Überschuss-Wärme bei diesen extremen Sonneneinstrahlungsbedingen, d.h. beim Verringern des jährlichen "Heat-Dumping"-Anteils, ist der zusätzliche Wärmetauscher 17 in Form eines Hochdruck-Speisewasser-Vorwärmers jeweils zwei bis drei Stunden an einem solchen besonderen Sonnenscheintag in Betrieb.

Der vom Wärmeträgermedium beheizte, zusätzliche Wärmetauscher 17 in Form eines Hochdruck-Speisewasser-Vorwärmers wird im Rahmen seiner verschiedenen Aufgaben gemäß der nachstehend aufgeführten drei Kategorien zeitweise, also nicht dauerhaft und permanent, vom Wärmeträgermedium, insbesondere Thermoöl, durchströmt.

Die Aufgabe der ersten Kategorie betrifft das Anfahren. Für das schnellere Anfahren der Dampferzeugungsstufe 4 und des Dampfturbinen-Generator-Satzes 11, 12, 16 und das schnellere Erreichen der vollen Generatorleistung, wird der Wärmetauscher 17 ca. eine Stunde pro täglichem Warmstart in Betrieb genommen.

Die zweite Aufgabenkategorie betrifft die Abfangphase, insbesondere bei einer Notfall-Schnellabschaltung, einer Dampfturbine oder eine Turbosatzes. Für das Begrenzen des Temperatur-Schocks in den Hochdruck-Speisewasser-Vorwärmern, die in einem solchen Fall nicht mehr mit Anzapf-Dampf aus der Dampfturbine beheizt werden, wenn die Dampfturbine eine Notfall-Schnellabschaltung machen muss, wird der zunächst weiter unvermindert in Richtung Dampferzeuger strömende Hochdruck-Speisewasser-Strom alternativ durch den zusätzlichen Wärmetauscher 17 erwärmt. Zu diesem Zweck wird unmittelbar (wenige Bruchteile einer Sekunde) nach oder vorteilhafterweise besser sogleich mit dem "Trip"-Signal (Notfall-Schnellabschaltungs-Signal) der Dampfturbine begonnen, das Wärmeträgermedium durch diesen zusätzlichen Wärmetauscher 17 zu schicken. Gleichzeitig wird der Wasser-Dampf-Kreislauf 13 im Bypass-Modus zügig auf eine niedrigere Teillast heruntergefahren (abgefangen). In dieser beschriebenen Abfangphase wird der zusätzliche Wärmetauscher 17 für ca. fünfzehn Minuten vom Wärmeträgermedium durchströmt. Falls die Ursache für die Notfall-Schnellabschaltung der Dampfturbine schnell behoben werden kann, wird der zusätzliche Wärmetauscher 17 dann ebenfalls ca. fünfzehn Minuten pro Heißstart in Betrieb genommen.

Die dritte Aufgabenkategorie betrifft Tage oder Zeiträume, an welchen außerordentliche Überschuss-Wärme auftritt. Beim Nutzen eines Teiles dieser außerordentlich auftretenden Überschuss-Wärme bei besonders extremen Sonneneinstrahlungsbedingungen, d.h. beim Verringern des jährlichen Heat-Dumping-Anteils, ist der zusätzliche Wärmetauscher 17 jeweils in einer Größenordnung von zwei bis drei Stunden an solch einem besonderen Sonnenschein-Tag in Betrieb und wird vom Wärmeträgermedium durchströmt.

## Patentansprüche

1. Solarthermisches Kraftwerk (1) mit einem solarthermisch beheizten Wärmeträgermedium-Kreislauf (2) und einem damit über eine in den Wärmeträgermedium-Kreislauf (2) eingebundene Dampferzeugungsstufe (4) thermisch gekoppelten Wasser-Dampf-Kreislauf (3) einer Turbinenstufe,
**dadurch gekennzeichnet,**
**dass** im Wasser-Dampf-Kreislauf (3) in der zwischen einem Entgaser (15) und der Dampferzeugungsstufe (4) ausgebildeten Speisewasservorwärmstrecke mindestens ein in den Wärmeträgermedium-Kreislauf (2) eingebundener Wärmetauscher (17) angeordnet ist.

2. Solarthermisches Kraftwerk nach Anspruch 1, **dadurch gekennzeichnet, dass** der mindestens eine Wärmetauscher (17) in Strömungsrichtung des Wärmeträgermediums stromabwärts der Dampferzeugerstufe (4) in den Wärmeträgermedium-Kreislauf (2) eingebunden ist.

3. Solarthermisches Kraftwerk (1) nach Anspruch 1 oder 2, **dadurch gekennzeichnet, dass** der mindestens eine Wärmetauscher (17) in Strömungsrichtung des Wärmeträgermediums stromabwärts eines parallel zur Dampferzeugerstufe (4) geschalteten Zwischenüberhitzers (10) in den Wärmeträgermedium-Kreislauf (2) eingebunden ist.

4. Solarthermisches Kraftwerk (1) nach einem der vorhergehenden Ansprüche, **dadurch gekennzeichnet, dass** der mindestens eine Wärmetauscher (17) als Hochdruck-Speisewasser-Vorwärmer ausgebildet ist.

5. Solarthermisches Kraftwerk (1) nach einem der vorhergehenden Ansprüche, **dadurch gekennzeichnet, dass** der mindestens eine Wärmetauscher (17) für eine tägliche Betriebszeit von bis zu fünf, vorzugsweise bis zu drei, Betriebsstunden ausgelegt ist.

6. Verfahren zum Betrieb eines solarthermischen Kraftwerks (1) nach einem der Ansprüche 1-5, **dadurch gekennzeichnet, dass** der mindestens eine Wärmetauscher (17) nicht permanent und/oder dauerhaft vom Wärmeträgermedium durchströmt wird.

7. Verfahren nach Anspruch 6, **dadurch gekennzeichnet, dass** der mindestens eine Wärmetauscher (17) beim Anfahren, insbesondere beim täglichen oder bei jedem Anfahren, und/oder pro, insbesondere täglichem, Warmstart des Kraftwerks (1) und/oder in der Abfangphase, insbesondere jeder Abfangphase, und/oder an Tagen, an welchen das Solarfeld (6) mehr Wärmeenergie produziert als es der Auslegung des solarthermischen Kraftwerks (1) entspricht, zumindest zeitweise vom Wärmeträgermedium des Wärmeträgermedium-Kreislaufs (2) durchströmt wird.

8. Verfahren nach Anspruch 7, **dadurch gekennzeichnet, dass** in einer Abfangphase des solarthermischen Kraftwerks (1) der mindestens eine Wärmetauscher (17) nach dem oder
gleichzeitig mit dem Auslösen eines Notfall-Schnellabschaltungssignals mindestens einer oder aller Dampfturbinen (n) (10, 12) vom Wärmeträgermedium des Wärmeträgermedium-Kreislaufs (2) durchströmt wird.

9. Verfahren nach Anspruch 8, **dadurch gekennzeichnet, dass** parallel der Wasser-Dampf-Kreislauf (3) auf eine Teillast oder in einen Teillastbereich heruntergefahren wird.

## Claims

1. Solar-thermal power plant (1) comprising a solar-thermally heated heat transfer medium circuit (2) and a water steam circuit (3), thermally connected thereto via a steam generation stage (4) incorporated into the heat transfer medium circuit (2), of a turbine stage, **characterised in that** at least one heat exchanger (17), which is incorporated into the heat transfer medium circuit (2), is arranged in the water steam circuit (3), in the supply water preheating path formed between a deaerator (15) and the steam generation stage (4).

2. Solar-thermal power plant according to claim 1, **characterised in that** the at least one heat exchanger (17) is incorporated into the heat transfer medium circuit (2) downstream from the steam generation stage (4) in the flow direction of the heat transfer medium.

3. Solar-thermal power plant (1) according to either claim 1 or claim 2, **characterised in that** the at least one heat exchanger (17) is incorporated into the heat transfer medium circuit (2) downstream from an intermediate superheater (10), connected in parallel with the steam generation stage (4), in the flow direction of the heat transfer medium.

4. Solar-thermal power plant (1) according to any one of the preceding claims, **characterised in that** the at least one heat exchanger (17) is in the form of a high-pressure supply water preheater.

5. Solar-thermal power plant (1) according to any one of the preceding claims, **characterised in that** the at least one heat exchanger (17) is configured for a daily operating time of up to five, preferably up to three operating hours.

6. Method for operating a solar-thermal power plant (1) according to any one of the preceding claims, **characterised in that** the at least one heat exchanger (17) is not permanently and/or constantly flowed through by the heat transfer medium.

7. Method according to claim 6, **characterised in that**, on start-up, in particular on daily start-up or on every start-up, and/or for each, in particular daily, warm start of the power plant (1) and/or in the quenching phase, in particular each quenching phase, and/or on days when the solar panel (6) produces more than the thermal energy corresponding to the configuration of the solar-thermal power plant (1), the at least one heat exchanger (17) is flowed through at least at times by the heat transfer medium of the heat transfer medium circuit (2).

8. Method according to claim 7, **characterised in that**, in a quenching phase of the solar-thermal power plant (1), the at least one heat exchanger (17) is flowed through by the heat transfer medium of the heat transfer medium circuit (2) after or simultaneously with the triggering of an emergency rapid shut-down signal of at least one or all of the steam turbines (n) (10, 12).

9. Method according to claim 8, **characterised in that** the water steam circuit (3) is reduced, in parallel, to a partial load or into a partial load range.

## Revendications

1. Centrale héliothermique (1) comportant un circuit de fluide caloporteur (2) chauffé par l'énergie thermique solaire et un circuit eau-vapeur (3) d'un étage de turbine couplé thermiquement par le biais d'un étage de production de vapeur (4) intégré dans le circuit de fluide caloporteur (2),
**caractérisée en ce que**
au moins un échangeur de chaleur (17) intégré dans le circuit de fluide caloporteur (2) est disposé dans le circuit eau-vapeur (3) dans la section de réchauffage d'eau d'alimentation formée entre un dégazeur (15) et l'étage de production de vapeur (4).

2. Centrale héliothermique selon la revendication 1, **caractérisée en ce que** l'au moins un échangeur de chaleur (17) est intégré dans le circuit de fluide caloporteur (2) en aval de l'étage de production de vapeur (4) dans le sens d'écoulement du fluide caloporteur.

3. Centrale héliothermique (1) selon la revendication 1 ou 2, **caractérisée en ce que** l'au moins un échangeur de chaleur (17) est intégré dans le circuit de fluide caloporteur (2) en aval d'un resurchauffeur (10) branché en parallèle à l'étage de production de vapeur (4) dans le sens d'écoulement du fluide caloporteur.

4. Centrale héliothermique (1) selon l'une quelconque des revendications précédentes, **caractérisée en ce que** l'au moins un échangeur de chaleur (17) est façonné comme un réchauffeur d'eau d'alimentation à haute pression.

5. Centrale héliothermique (1) selon l'une quelconque des revendications précédentes, **caractérisée en ce que** l'au moins un échangeur de chaleur (17) est conçu pour une durée de fonctionnement journalière allant jusqu'à cinq, de préférence, jusqu'à trois heures de fonctionnement.

6. Procédé d'exploitation d'une centrale héliothermique (1) selon l'une quelconque des revendications 1 à 5, **caractérisé en ce que** l'au moins un échangeur de chaleur (17) n'est pas parcouru en permanence et/ou durablement par le fluide caloporteur.

7. Procédé selon la revendication 6, **caractérisé en ce que** l'au moins un échangeur de chaleur (17) est parcouru au moins par intermittence par le fluide caloporteur du circuit de fluide caloporteur (2) lors de la mise en marche, en particulier lors de la mise en marche quotidienne ou lors de chaque mise en marche, et/ou pour chaque démarrage à chaud, en particulier quotidien, de la centrale (1) et/ou lors de la phase de captage, en particulier lors de chaque phase de captage, et/ou les jours où le champ de panneaux solaires (6) produit une quantité d'énergie thermique supérieure à celle correspondant à la conception de la centrale héliothermique (1).

8. Procédé selon la revendication 7, **caractérisé en ce que**, lors d'une phase de captage de la centrale héliothermique (1), l'au moins un échangeur de chaleur (17) est parcouru par le fluide caloporteur du circuit de fluide caloporteur (2) après ou simultanément à l'émission d'un signal d'arrêt d'urgence rapide d'au moins une ou de la totalité des turbines à vapeur (n) (10, 12).

9. Procédé selon la revendication 8, **caractérisé en ce que** la capacité du circuit eau-vapeur (3) est réduite en parallèle à une charge partielle ou dans une plage de charge partielle.
